# EUROPEAN PATENT APPLICATION

(11) **EP 1 132 729 A2**
(43) Date of publication of application: **12.09.2001**
(21) Application number: 01102163.1
(22) Date of filing: 02.02.2001
(51) Int. Cl.: G01M 1/32

(54) **Automatic device for applying counterweights, particularly for balancing**

(30) Priority: 07.03.2000 IT MI000448
(71) Applicant: Buzzi, Carlo, 23826 Mandello del Lario (Lecco) (IT)
(72) Inventor: Buzzi, Carlo, 23826 Mandello del Lario (Lecco) (IT)
(74) Representative: Modiano, Guido, Dr.-Ing.

(57) **Abstract**

An automatic device for applying counterweights, particularly for balancing machines for wheel assemblies of cars and the like, comprising an arm (4) which is actuated by actuation means (8) and is suitable to support, at one end, at least one counterweight (6) suitable to be applied to a wheel (7) of a wheel assembly, the arm being movable toward the wheel by way of the action of the actuation means, sensor means (9) detecting the position of the arm (4) with respect to the wheel (7), in order to control the actuation means (8).

## Description

The present invention relates to an automatic device for applying counterweights, particularly for balancing machines for wheel assemblies of cars and the like.

It is known that for balancing a car wheel assembly it is necessary to apply thereto one or more counterweights in certain angular positions of the wheel assembly, so as to make its center-of-gravity axis and main axis of inertia coincide with the rotation axis.

This operation is usually performed by means of a balancing machine comprising a mechanical section and a measurement section which is suitable to provide the user with information as to the masses to be added to specific correction planes, in appropriate angular positions, so that the wheel assembly is perfectly balanced.

The calibration process of a balancing machine related to a generic wheel assembly is generally constituted by entering, in the measurement section of the apparatus, data suitable to identify the selected correction planes on the wheel assembly with respect to the structure of the balancing machine.

These data are indispensable for the measurement instruments, in order to be able to calculate, according to known methods, the extent and the exact position of the compensating masses (counterweights) to be applied to the wheel assembly.

In some cases, the counterweights are fitted on the rim of the wheel and therefore, after setting the position of such rims with respect to the balancing machine, it is simple to find the regions where the counterweights are to be applied after measurement.

In other cases, particularly with alloy wheels, the adhesive counterweights are often required to be fitted on the inside of the wheel, so as to avoid compromising its outward appearance.

Accordingly, once the planes where the counterweights can be applied have been determined, it becomes rather difficult, after the measurement step, to precisely locate the set planes again.

Often on the inside of the wheel there are no reference points which allow assured application of the counterweights in an unambiguous position.

In order to solve this drawback, devices are commonly known being suitable to store the preset distance of the structure of the machine with respect to the wheel and make it available after the measurement operation.

However, even with this type of machine the application of the counterweights is still not easy, since the operator has to act while his hands are in a position in which they are not in view, inside the wheel assembly, and must simultaneously position the wheel in angular terms so as to apply the counterweights in the preset angular position.

This of course causes difficulty in assembling the counterweights, an increase in the time required for the operation and ultimately a higher cost for the customer.

The aim of the present invention is to provide an automatic device for applying counterweights, particularly for balancing machines for wheel assemblies of cars and the like, which allows the operator to automatically apply the counterweights inside the wheel assembly, fully eliminating any resort to a manual operation.

Within this aim, an object of the present invention is to provide an automatic device for applying counterweights, particularly for balancing machines for wheel assemblies of cars and the like, which allows to automatically apply the counterweights inside a wheel by being applied to a commercially available balancing machine.

Another object of the present invention is to provide an automatic device for applying counterweights, particularly for balancing machines for wheel assemblies of cars and the like, which can be integrated in the rod of the balancing machine that acts as a sensor for the correction planes or can be provided as an independent device.

Another object of the present invention is to provide an automatic device for applying counterweights, particularly for balancing machines for wheel assemblies of cars and the like, which is highly reliable, relatively simple to manufacture and at competitive costs.

This aim and these and other objects which will become better apparent hereinafter are achieved by an automatic device for applying counterweights, particularly for balancing machines for wheel assemblies of cars and the like, characterized in that it comprises an arm being actuated by actuation means and suitable to support, at one end, at least one counterweight which is suitable to be applied to a wheel of a wheel assembly, said arm being movable toward said wheel by way of the action of said actuation means, sensor means detecting the position of said arm with respect to said wheel, in order to control said actuation means.

Further characteristics and advantages of the invention will become better apparent from the description of preferred but not exclusive embodiments of the device according to the invention, illustrated only by way of non-limitative example in the accompanying drawings, wherein:
Figure 1 is a schematic view of the device for applying counterweights according to the present invention, in a first embodiment;
Figure 2 is a view of a detail of the counterweight application device shown in Figure 1;
Figure 3 is a schematic view of a second embodiment of the counterweight application device according to the present invention;
Figure 4 is a schematic view of a third embodiment of the counterweight application device according to the present invention; and
Figure 5 is a detail view of the device of Figure 4.

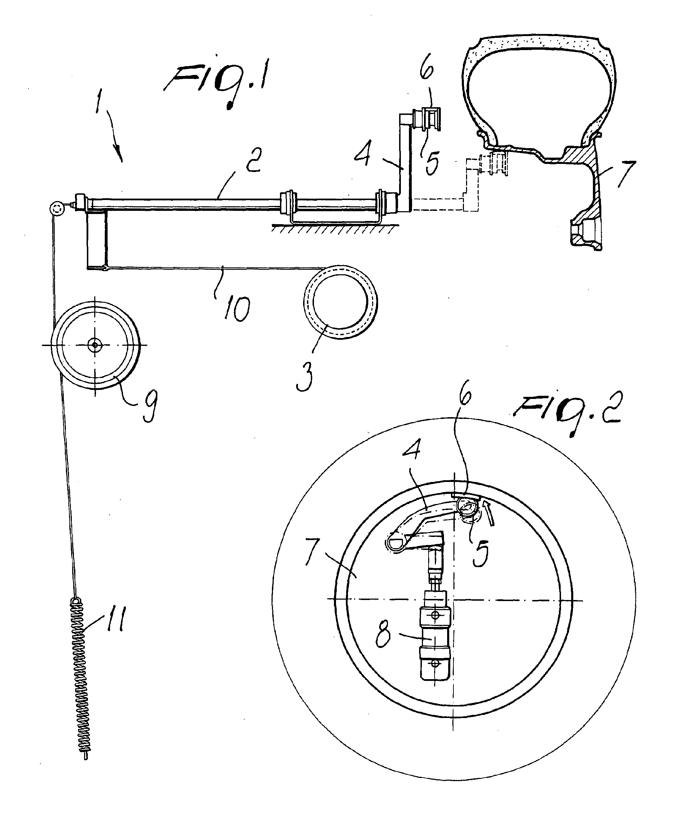

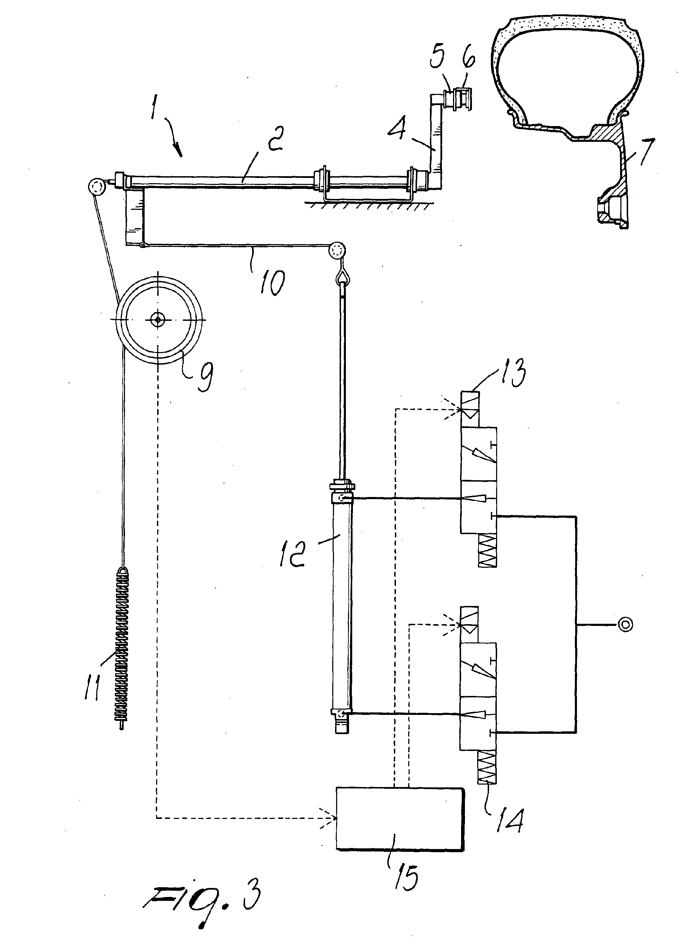

With reference to the figures, wherein identical reference numerals designate identical elements, the device according to the present invention, in a first embodiment, shown in Figures 1 and 2 and generally designated by the reference numeral 1, comprises a movable arm 2 being actuated by movement means 3 which are conveniently provided for example by an electric motor.

The movable arm 2 is provided, at one of its ends, with a second arm 4 being in turn provided with grip means 5 which are suitable to support and retain at least one counterweight 6 designed to be applied inside the wheel 7 of a vehicle wheel assembly.

The movement means 3 thus allow the (translatory) movement of the movable arm 2 toward the wheel 7 of the wheel assembly, while the second arm 4 allows, as described in detail hereinafter, to apply the counterweight 6 to the inner surface of the wheel 7.

The second arm 4 is actuated by actuation means 8, conveniently provided for example by a pneumatic cylinder, which push the second arm 4 against the wheel 7, so that the counterweight 6, retained by the grip means 5, can be applied to the wheel 7.

Sensor means 9 detect the position of the movable arm 2 with respect to the wheel 7 and thus control the movement means 3.

Figure 1 illustrates an embodiment in which the movement means 3 are constituted by an electric motor which, by way of a traction element 10, moves the movable arm 2, whose return to the initial position is allowed by the presence of return means 11 which are connected to the sensor means 9 and are appropriately constituted for example by a spring.

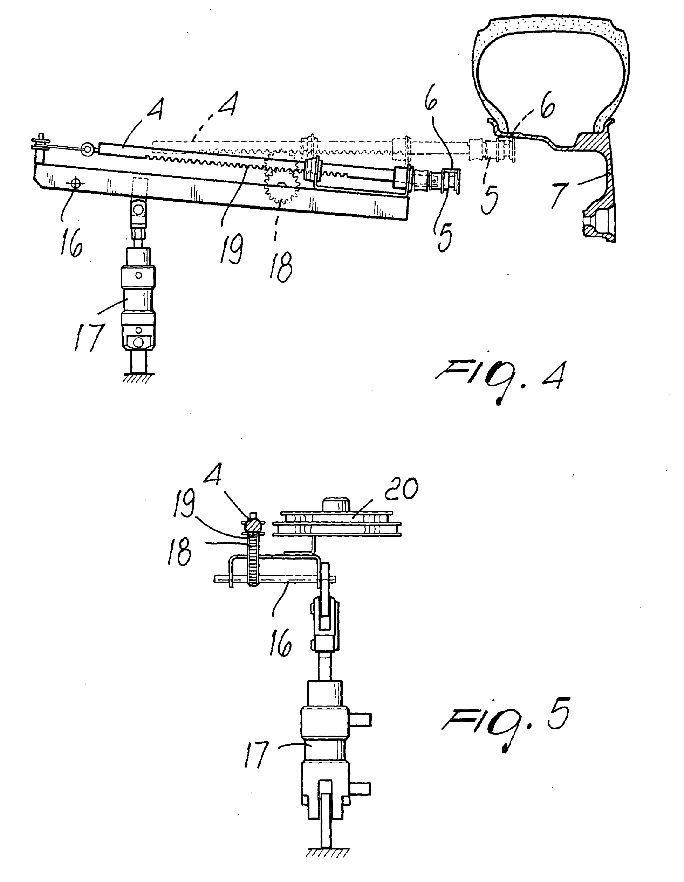

Figure 3 illustrates a second embodiment of the device according to the present invention, in which the means for moving the movable arm 2 are constituted, in this case, by a pneumatic cylinder 12 being actuated by two electric valves 13 and 14 which are activated by a control unit 15 which receives position information from the sensor means 3. The control unit 15 activates and deactivates the electric valves 13 and 14 so as to keep the pneumatic cylinder 12 substantially in the intended position. Such cylinder can be replaced with an electric motor, a hydraulic system or any other conventional type of actuator.

Figure 4 instead illustrates a third embodiment of the device according to the present invention, in which the second arm 4 is mounted so that it is pivoted on a fulcrum 16 and a cylinder 17 pushes the arm 4 against the wheel 7, while the actuation movement is provided by a motor 18 which, by way of a rack 19, moves the arm 4 axially, according to a measurement read by sensor means 19 (see Figure 5) which are not shown in Figure 4.

Figure 4 illustrates the two operating positions assumed by the arm: a first position, in solid lines, in which the arm 4 is not close to the wheel rim 7, and a second position, shown in dashed lines, in which the arm 4 moves closer to the wheel 7 and allows to apply the counterweight 6 to the inner side of the wheel 7.

In all of the above described embodiments, it is thus evident that the device according to the invention allows to apply automatically, and at the exact angular position of the wheel, counterweights 6 without requiring the user to perform a manual operation, operating without being able to see the inner region of the wheel 7.

If the balancing machine is provided with an electric motor which is capable of exactly positioning the wheel, the application of the counterweight 6 can be entirely automatic and can occur rigorously in the exact position. To this end, it is sufficient to enable the actuation means only when the wheel is in the exact angular position in which the counterweight is to be applied.

In practice it has been found that the device according to the invention fully achieves the intended aim and objects, since it allows to automatically apply counterweights at the inner side of the wheel of a wheel assembly without requiring manual intervention on the part of the operator.

The device thus conceived is susceptible of numerous modifications and variations, all of which are within the scope of the appended claims; all the details may further be replaced with other technically equivalent elements.

In practice, the materials used, so long as they are compatible with the specific use, as well as the dimensions, may be any according to requirements and to the state of the art.

The disclosures in Italian Patent Application No. MI2000A000448 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An automatic device for applying counterweights, particularly for balancing machines for wheel assemblies of cars and the like, **characterized in that** it comprises an arm being actuated by actuation means and suitable to support, at one end thereof, at least one counterweight which is suitable to be applied to a wheel of a wheel assembly, said arm being movable toward said wheel by way of the action of said actuation means, sensor means detecting the position of said arm with respect to said wheel, in order to control said actuation means.

2. The device according to claim 1, **characterized in that** said arm suitable to support at one end at least one counterweight has, at said end, grip means suitable to support said at least one counterweight and allow its application in an internal region of said wheel.

3. The device according to claim 1, **characterized in that** said arm is connected to the end of a movable arm which is moved directly by said actuation means, said movable arm being suitable to move toward/away from said wheel.

4. The device according to claim 3, **characterized in that** said actuation means comprise an electric motor suitable to actuate said movable arm by way of traction means and allow its translatory motion toward/away from said wheel.

5. The device according to claim 5, **characterized in that** said sensor means are suitable to determine the movement of said movable arm toward/away from said wheel and are provided with return means which allow the return of said movable arm to the initial position.

6. The device according to claim 3, **characterized in that** said arm suitable to support said at least one counterweight is moved toward said wheel by actuation means which allow a movement of said arm being independent of the movement of said movable arm.

7. The device according to one or more of the preceding claims,
**characterized in that** said actuation means suitable to move said movable arm toward/away from said wheel comprise a pneumatic cylinder being actuated by two electric valves being in turn driven by a control unit which is connected to said sensor means in order to determine the position of said pneumatic cylinder on the basis of the position of said movable arm with respect to said wheel.

8. The device according to claim 1, **characterized in that** said arm suitable to support said at least one counterweight is pivoted at a pivoting point and said actuation means allow to move said arm about said pivoting point, additional movement means being suitable to allow the movement of said arm toward/away from said wheel rim.

9. The device according to claim 8, **characterized in that** said additional movement means comprise an electric motor which allows the sliding of said arm along a rack.

10. The device according to claim 9, **characterized in that** said actuation means which allow the movement, about said pivoting point, of the arm suitable to support at least one counterweight comprise a cylinder.

11. A wheel assembly balancing machine, particularly for cars and the like, **characterized in that** it comprises a device according to one or more of the preceding claims.
